# EUROPÄISCHE PATENTSCHRIFT

(11) **EP 1 071 573 B1**
(45) Veröffentlichungstag und Bekanntmachung des Hinweises auf die Patenterteilung: **22.06.2005**
(21) Anmeldenummer: 99926267.8
(22) Anmeldetag: 19.04.1999
(51) Int. Cl.: B60L 11/18, H01M 8/04

(54) **VERFAHREN ZUM STARTEN EINER BRENNSTOFFZELLENANLAGE SOWIE BRENNSTOFFZELLENANLAGE**
METHOD FOR STARTING A FUEL CELL SYSTEM AND FUEL CELL SYSTEM
PROCEDE PERMETTANT DE FAIRE DEMARRER UN DISPOSITIF A CELLULES ELECTROCHIMIQUES ET DISPOSITIF A CELLULES ELECTROCHIMIQUES

(30) Priorität: 17.04.1998 DE 19817188
(43) Veröffentlichungstag der Anmeldung: 31.01.2001
(73) Patentinhaber: SIEMENS AKTIENGESELLSCHAFT, 80333 München (DE)
(72) Erfinder: STÜHLER, Walter, D-96114 Hirschaid (DE); WEISS, Alfred, D-91301 Forchheim (DE)
(86) Internationale Anmeldenummer: PCT/DE1999/001166
(87) Internationale Veröffentlichungsnummer: WO 1999/054159

(56) Entgegenhaltungen:
- DE-A- 4 322 767
- DE-A- 19 731 250
- JP-A- 8 289 410

## Beschreibung

Die Erfindung betrifft ein Verfahren zum Starten einer Brennstoffzellenanlage mit einem Brennstoffzellenstapel, einem Verdichter zum Zuführen eines Betriebsmittels zum Brennstoffzellenstapel und einem Elektromotor zum Antrieb des Verdichters. Die Erfindung betrifft ferner eine Brennstoffzellenanlage mit einem Brennstoffzellenstapel, einem Verdichter zum Zuführen eines Betriebsmittels zum Brennstoffzellenstapel und einem Elektromotor zum Antrieb des Verdichters.

Aus DE 43 22 767 C2 sind eine Brennstoffzellenanlage und ein Verfahren zum Starten einer Brennstoffzellenanlage der eingangs genannten Art bekannt. Die darin beschriebene Brennstoffzellenanlage ist eine Luft- und Wasserstoffanlage. Zum Verdichten der Luft ist bei der bekannten Anlage ein Kompressor vorgesehen, der mit einem Elektromotor betreibbar ist. Der Elektromotor wird während der Startphase aus einer mobilen Starterbatterie gespeist.

Da beim Stand der Technik die Ausgangsspannung der Starterbatterie unterschiedlich zur Betriebsspannung des Brennstoffzellenstapels der Brennstoffzellenanlage ist, die am Ausgang des Brennstoffzellenstapels vorliegt, ist beim Stand der Technik neben dem Startermotor ein gesonderter Elektromotor vorgesehen, der auf die höhere Spannung des Brennstoffzellenstapels ausgelegt ist. Eine derartige Vorrichtung ist relativ aufwendig, da sie zwei gesonderte Elektromotoren benötigt, die platz- und raumaufwendig an den Verdichter angekoppelt werden müssen.

Die DE 197 31 250 A1 offenbart eine Brennstoffzellenanlage und ein Verfahren zum Starten einer Brennstoffzellenanlage, bei dem ein Elektromotor zuerst aus einer Batterie und dann in dem Maße von Brennstoffzellen mit Strom versorgt wird, wie die Brennstoffzellen Strom liefern. Zwischen Elektromotor und Batterie / Brennstoffzelle ist ein DC/DC-Wandler geschaltet.

Der Erfindung liegt die Aufgabe zugrunde, ein Verfahren zum Starten einer Brennstoffzellenanlage anzugeben, das hinsichtlich des Betriebes des Verdichters vereinfacht ist und eine Brennstoffzellenanlage anzugeben, die mit einem reduzierten baulichen und räumlichen Aufwand auskommt.

Die auf das Verfahren gerichtete Aufgabe wird durch ein Verfahren zum Starten einer Brennstoffzellenanlage mit den kennzeichnenden Merkmalen des Patentanspruchs 1 gelöst.

Vorteilhafte Weiterbildungen des Verfahrens bzw. der Brennstoffzellenanlage ergeben sich aus den Unteransprüchen 2 - 12.

Kern der Erfindung ist das Umschalten der Stromversorgung des Elektromotors von der Starterbatterie zum Brennstoffzellenstapel, und nötigenfalls auch zurück. Dabei wird als nicht beanspruchtes Beispiel eine Ausfürungsform für einen Gleichstrommotor beschrieben. Erfindungsgemäss wird eine Ausführungsform für Synchron-und Asynchronmotoren beansprucht. Das Umschalten erfolgt, wenn die Spannung am Ausgang des Brennstoffzellenstapels einen ausreichenden Wert erreicht. Die elektrische Verbindung zwischen Ausgang der Starterbatterie und dem Motoreingang wird unterbrochen und der Motoreingang auf die Ausgangsspannung des Brennstoffzellenstapels umgeschaltet. Ein Brennstoffzellenstapel wird in der Fachliteratur auch Brennstoffzellen-Stack genannt.

In einer Weiterbildung der Erfindung ist die Brennstoffzellenanlage eine mobile Luft- und Wasserstoffanlage, insbesondere für ein Fahrzeug, wie ein Baufahrzeug, ein Hallenfahrzeug, einen Bus und dergleichen. Der Brennstoffzellenanlage wird beim Start und Betrieb als Betriebsmittel Luft zugeführt, und die Luft wird durch den motorisch betriebenen Verdichter geführt, um den notwendigen Betriebsdruck und gegebenenfalls eine zusätzliche Befeuchtung der Luft sicherzustellen. Eine geeignete Brennstoffzellenanlage ist eine PEM-Brennstoffzellenanlage mit PEM-Brennstoffzellen. Hierbei steht PEM für Proton Exchange Membrane oder auch Polymer Elektrolyt Membran.

Vorteilhafterweise wird der Elektromotor des Verdichters während der Startphase der Brennstoffzellenanlage aus der Star-terbatterie gespeist. Während der Startphase baut der Brennstoffzellenblock noch keine oder noch nicht die nötige Spannung auf, um den Elektromotor zu betreiben.

In vorteilhafter Weiterbildung der Erfindung ist für das Umschalten der Stromversorgung des Elektromotors eine Steuerungseinrichtung vorgesehen, die bei Erreichen einer ausreichenden Ausgangsspannung des Brennstoffzellenstapels die elektrische Verbindung zwischen Ausgang der Starterbatterie und dem Motoreingang unterbricht und den Motoreingang auf die Ausgangsspannung des Brennstoffzellenstapels umgeschaltet.

Beispielhaft entspricht die Betriebsspannung des Elektromotors der Spannung der Starterbatterie und die Steuerungseinrichtung umfaßt einen Stromrichter der die Ausgangsspannung des Brennstoffzellenstapels auf die Betriebsspannung des Elektromotors oder darunter herunterregelt. Ein Stromregler ist in der Lage, die Ausgangsspannung des Brennstoffzellenstapels auf die Betriebsspannung des Gleichstrommotors herunterzuregeln und dabei diesen vorteilhafterweise auch auf konstanter Drehzahl zu halten.

Der Steuerungseinrichtung kommt vorteilhafterweise eine Doppelfunktion zu: Zum einen die Auswahl bzw. Umschaltung der zugeführten Betriebsspannung für den Elektromotor während der Startphase und während der Betriebsphase der Anlage. Und zum anderen die vorteilhafte permanente Regelung des Motors, die für einen optimierten Betrieb des Brennstoffzellen-Stack wichtig ist, da der Verdichter reproduzierbare und vorteilhafterweise optimierte Leistungen erbringen sollte.

Die Umschaltung von der Starterbatterie auf den Ausgang des Brennstoffzellenstapels erfolgt vorteilhafterweise dann, wenn die Ausgangsspannung des Brennstoffzellenstapels höher als die Spannung der Starterbatterie ist, da dann durch den Stromrichter nur eine Herabregelung des Ausgangsspannungspegels des Brennstoffzellenstapels erfolgen muß.

Mit Vorteil ist die Ausgangsspannung des Brennstoffzellenstapels etwa doppelt so hoch ausgelegt wie die Spannung der Starterbatterie. Bei dieser Ausgestaltung der Erfindung können die elektrischen und elektronischen Bauteile des Stromrichters für eine mobile Anlage noch in kleinen Dimensionen gehalten werden.

Ein weiterer Vorteil läßt sich dadurch erreichen, daß der Stromrichter ein Gleichstromsteller (DC/DC-Steller) und der Elektromotor ein Gleichstrommotor ist.

In erfindungsgemäßer Ausgestaltung der Erfindung ist der Elektromotor ein Synchron- oder Asynchronmotor und die Steuerungseinrichtung umfaßt einen Stromrichter, der als Umrichter, beispielsweise als DC/3AC-Steller ausgebildet ist. Ferner weist der Eletromotor zwei getrennte Wicklungssysteme auf, wobei das erste Wicklungssystem für die Spannung der Starterbatterie und das zweite Wicklungssystem für die höhere Spannung des Brennstoffzellenstapels ausgelegt ist.

Über die Steuerungseinrichtung wird wiederum die Motorregelung und die Umschaltung und Anwahl der beiden Spannungsquellen vorgenommen. Die auf die Spannung der Starterbatterie ausgelegte erste Wicklung kann über Abschaltorgane von den Spannungsquellen getrennt werden. Die Abschaltorgane sind durch die Umschaltvorrichtung in Form eines DC/3AC-Stellers steuerbar. Das auf die Betriebsspannung des Brennstoffzellen-Stack ausgelegte zweite Wicklungssystem ist kontinuierlich mit dem Stellerausgang verbunden.

Zweckmäßigerweise wird aus der Starterbatterie nur solange Strom gezogen, bis das Spannungsniveau am Ausgang des Brennstoffzellen-Stacks einen vorgebbaren Übergangswert erreicht hat. Dieser liegt über dem Spannungsniveau der Starterbatterie.

Zur Schonung der elektrischen Bauteile und des Motors erfolgt die Abschaltung des ersten Wicklungssystems des Elektromotors zweckmäßigerweise im Nulldurchgang.

Die auf die Brennstoffzellenanlage gerichtete Aufgabe wird durch eine Brennstoffzellenanlage mit den kennzeichnenden Merkmalen des Patentanspruchs 13 gelöst.

Vorteilhafte Weiterbildungen der Brennstoffzellenanlage ergeben sich aus den Unteransprüchen 14 - 21.

Vorteilhafterweise ist die Brennstoffzellenanlage eine mobile, mit Luft und Wasserstoff betreibbare Brennstoffzellenanlage zum Betrieb von Fahrzeugen. Die Brennstoffzellenanlage umfaßt mindestens einen Brennstoffzellenstapel, der wiederum eine Mehrzahl von Brennstoffzellen umfaßt. Den Brennstoffzellen wird über je einen Einlaß beispielsweise Wasserstoff und verdichtete Luft zugeführt. Mit dem Einlaß der Brennstoffzellen ist ein Luftverdichter verbunden, der einen motorischen Antrieb mit einem aus einer Starterbatterie speisbaren Elektromotor aufweist.

Beispielhaft ist der Motor über eine elektronische Steuerungseinrichtung mit den Energiequellen verbunden. Die Steuerungseinrichtung weist einen Stromrichter mit Zwischenkreis, beispielsweise einen Gleichstromsteller oder Umrichter auf, je nach dem, ob der Elektromotor des Verdichters ein Gleichstrommotor oder Wechsel- oder Drehstrommotor ist.

Vorteilhafterweise weist die Steuerungseinrichtung neben ihrer Steuerungsfunktion auch noch eine Umschaltfunktion und damit eine Umschaltvorrichtung auf, die elektrisch dem Eingang des Stromrichters vorgeschaltet ist.

Der Ausgang des Stromrichters ist zweckmäßigerweise permanent mit dem Eingang des Elektromotors verbunden.

Ist die Steuerungseinrichtung als Umrichter, als DC/3AC-Steller ausgebildet, können sowohl der Ausgang der Starterbatterie als auch der Ausgang des Brennstoffzellen-Stack permanent über Entkopplungsdioden mit dem Eingang des DC/3AC-Stellers verbunden sein.

In der erfindungsgemäßer Ausgestaltung der Erfindung weise der als Drehstrommotor ausgebildete Elektromotor des Verdichters zwei getrennte Wicklungssysteme auf. Hierbei ist das erste Wicklungssystem für die Zuführung der niedrige Spannung der Starterbatterie ausgelegt, und das zweite Wicklungssystem für die Zuführung einer höheren Spannung, nämlich der Spannung des Brennstoffzellenstapels.

Das auf die niedrigere Spannung ausgelegte erste Wicklungssystem des Elektromotors ist zweckmäßigerweise abschaltbar, sobald ein Übergangsspannungswert erreicht wird, der dem empfindlichen ersten Wicklungssystem gefährlich werden könnte. Die eigentliche Abschaltvorrichtung ist vorteilhafterweise in den Elektromotor bzw., Verdichtermotor integriert.

Die Erfindung ist in den Zeichnungsfiguren näher erläutert. Diese zeigen:
- FIG 1: eine Brennstoffzellenanlage mit Gleichstrom-Verdichtermotor;
- FIG 2: eine Brennstoffzellenanlage mit Drehstrom-Synchron- oder -Drehstrom-Asynchronmotor.

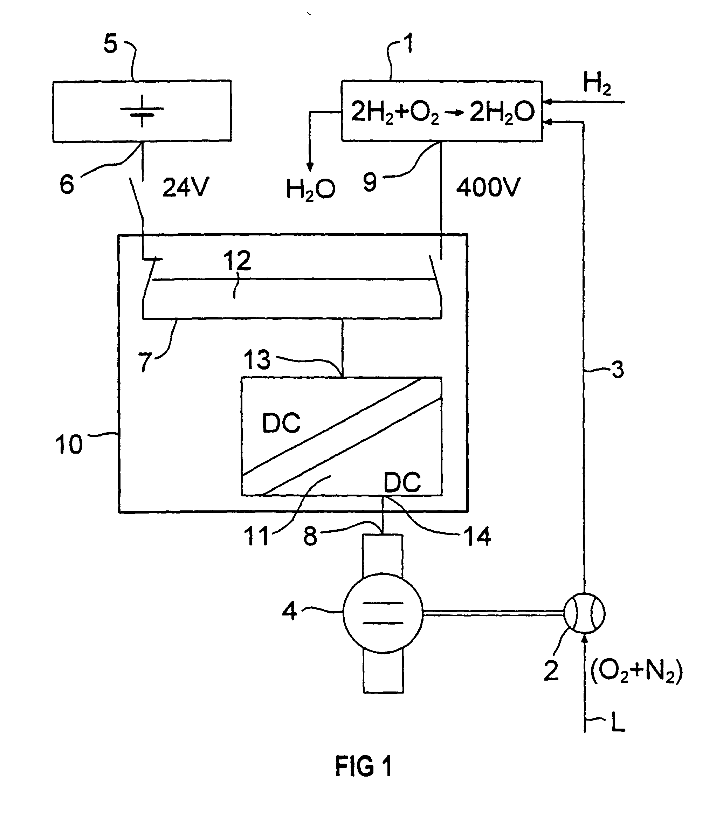

Die zunächst in FIG 1 nur schematisch und mit den prinzipiellen Komponenten hinsichtlich der Erfindung dargestellte mobile Brennstoffzellenanlage umfaßt eine Mehrzahl von Brennstoffzellen, die als Brennstoffzellenstapel 1 ausgebildet und dargestellt sind. Über einen Verdichter 2 und eine Leitung 3 wird dem Brennstoffzellenstapel 1 verdichtete Luft zugeführt.

Der Verdichter 2 wird durch einen Elektromotor 4 angetrieben, der während der Start- oder Anlaufphase der Brennstoffzellenanlage aus einer Starterbatterie 5 gespeist wird, an deren Ausgang 6 eine Betriebsspannung von 24V anliegt, die über eine Leitung 7 dem Motoreingang 8 zugeführt wird. Der Motoreingang 8 ist nicht nur mit dem Ausgang 6 der Starterbatterie 5 verbunden, sondern ist auch mit dem Ausgang 9 des Brennstoffzellenstapels 1 verbindbar. Hierzu ist eine Steuerungseinrichtung 10 vorgesehen, die einen Stromrichter 11 aufweist. Der Stromrichter 11 ist ein Gleichstromsteller (DC/DC-Steller) für den als Gleichstrommotor ausgelegten Elektromotor 4 des Verdichters 2.

Die Umschaltung vom Ausgang 6 der Starterbatterie 5 auf den Ausgang 9 des Brennstoffzellenstapel 1 erfolgt über eine Umschaltvorrichtung 12, deren Umschaltverhalten durch einen Ausgang 13 der Steuerungseinrichtung 10 steuerbar ist. Der Ausgang 14 des Stromrichters 11 ist permanent mit dem Eingang 8 des Elektromotors 4 verbunden.

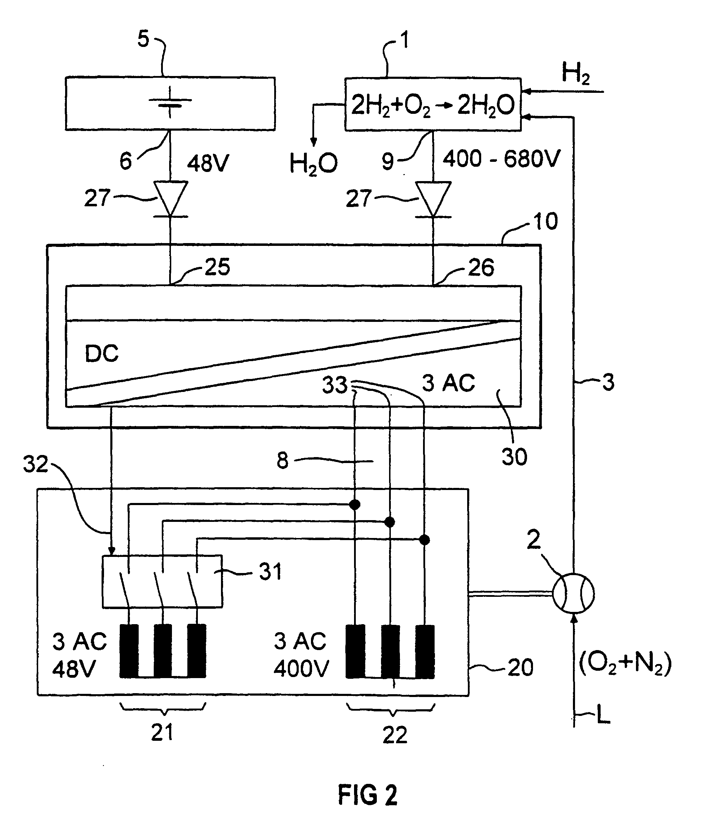

In FIG 2 ist ebenfalls eine Brennstoffzellenanlage dargestellt. Allerdings ist der Elektromotor 20 zum Betrieb des Verdichters 2 kein Gleichstrommotor, sondern erfindungsgemäß ein Drehstrom-Synchron- oder Drehstrom-Asynchronmotor und weist zwei getrennte Wicklungssysteme 21, 22 auf. Das erste Wicklungssystem 21 ist für die Zuführung der Ausgangsspannung der Starterbatterie 5 ausgelegt und die zweite Wicklung 22 ist für die höhere Spannung des Brennstoffzellenstapels 1 ausgelegt.

Die Ausgangsspannungen an den Ausgängen 6 und 9 der Spannungsquellen unterscheiden sich bei dem in FIG 2 dargestellten Ausführungsbeispiel deutlich. Die Starterbatterie 5 liefert eine Ausgangsspannung von beispielsweise 48 V. Der Brennstoffzellenstapel 1 ist so ausgelegt, daß an seinem Ausgang 9 die Betriebsspannung von 400 - 680 V anliegt.

In die Stromleitungen zwischen dem Ausgang 6 der Starterbatterie 5 und dem Ausgang 9 des Brennstoffzellenstapels 1 und den Eingängen 25 und 26 der Steuerungseinrichtung 10 sind Entkopplungsdioden 27 geschaltet. Die Steuerungseinrichtung 10 umfaßt einen Stromrichter 30 für den Elektromotor 20, der als Umrichter (DC/3AC-Steller) ausgebildet ist.

Im Bereich des Elektromotors 20 sind noch Abschaltelemente 31 integriert, die über einen Ausgang 32 der Steuerungseinrichtung 10 aktiviert werden können und eine Trennung des Wicklungssystems 21 vom Ausgang 33 des Stromrichters 30 bewirken. Dies geschieht, wenn der Brennstoffzellenstapel 1 eine Spannung erreicht, die wesentlich höher ist, als die der Starterbatterie. Dann speist der Brennstoffzellenstapel den Gleichstromteil der Steuerungseinrichtung 10.

## Patentansprüche

1. Verfahren zum Starten einer Brennstoffzellenanlage mit einem Brennstoffzellenstapel (1), einem Verdichter (2) zum Zuführen eines Betriebsmittels zum Brennstoffzellenstapel (1) und einem Elektromotor (20) zum Antrieb des Verdichters (2),
**dadurch gekennzeichnet, daß** der Elektromotor (20) zunächst mit Strom aus einer Starterbatterie (5) und dann mit Strom aus dem Brennstoffzellenstapel (1) gespeist wird, wobei der Elektromotor (20) ein Synchron- oder Asynchronmotor ist, der zwei getrennte Wicklungssysteme (21,22) aufweist, und das erste Wicklungssystem (21) auf die Spannung der Starterbatterie (5) und das zweite Wicklungssystem (22) auf die Betriebsspannung des Brennstoffzellenstapels (1) ausgelegt ist, und eine Steuerungseinrichtung (10) vorgesehen ist, die einen Stromrichter (30) umfaßt, der bevorzugt als Umrichter ausgebildet ist.

2. Verfahren nach Anspruch 1,
**dadurch gekennzeichnet, daß** die Brennstoffzellenanlage eine mobile Luft- und Wasserstoffanlage ist, und daß der Brennstoffzellenanlage beim Start und Betrieb als Betriebsmittel Luft (L) zugeführt wird, und daß die Luft (L) durch den motorisch betriebenen Verdichter (2) geführt wird, um den notwendigen Betriebsdruck und gegebenenfalls eine zusätzliche Befeuchtung der Luft (L) sicherzustellen.

3. Verfahren nach Anspruch 1 oder 2,
**dadurch gekennzeichnet, daß** der Elektromotor (20) des Verdichters (2) während der Startphase der Brennstoffzellenanlage aus der Starterbatterie (5) gespeist wird.

4. Verfahren nach einem der Ansprüche 1 bis 3,
**dadurch gekennzeichnet, daß** die Spannung der Starterbatterie (5) unterschiedlich zur Betriebsspannung des Brennstoffzellenstapels (1) ist.

5. Verfahren nach einem der Ansprüche 1 bis 4,
**dadurch gekennzeichnet, daß** bei Erreichen einer ausreichenden Ausgangsspannung des Brennstoffzellenstapels (1) eine zwischen dem Ausgang (6) der Starterbatterie (5) und/oder dem Ausgang (9) des Brennstoffzellenstapels (1) und dem Motoreingang (8) befindliche Steuerungseinrichtung (10) die vom Ausgang der Starterbatterie (5) zugeführte Startspannung unterbricht und die Ausgangsspannung des Brennstoffzellenstapels (1) auf den Elektromotor (20) schaltet.

6. Verfahren nach einem der Ansprüche 1 bis 5,
**dadurch gekennzeichnet, daß** die Drehzahl des Elektromotors (20) durch den Stromrichter (30) permanent geregelt wird.

7. Verfahren nach einem der Ansprüche 1 bis 6,
**dadurch gekennzeichnet, daß** die Umschaltung von der Starterbatterie (5) auf den Brennstoffzellenstapel (1) erfolgt, sobald die Ausgangsspannung des Brennstoffzellenstapels (1) höher ist als die Spannung der Starterbatterie (5).

8. Verfahren nach einem der Ansprüche 1 bis 7,
**dadurch gekennzeichnet, daß** die Betriebsspannung des Brennstoffzellenstapels (1) etwa doppelt so hoch ist wie die Spannung der Starterbatterie (5).

9. Verfahren nach einem der Ansprüche 1 bis 8,
**dadurch gekennzeichnet, daß** der Elektromotor (20) mit dem Ausgang (33) des Stromrichters (30) permanent verbunden ist, daß das auf die Betriebsspannung des Brennstoffzellenstapels (1) ausgelegte zweite Wicklungssystem (22) permanent mit dem Ausgang (33) des Stromrichters (30) verbunden ist, und daß das auf die Spannung der Starterbatterie (5) ausgelegte erste Wicklungssystem (21) über Abschaltelemente (31) von den Spannungsquellen (1,5) trennbar ist.

10. Verfahren nach Anspruch 9,
**dadurch gekennzeichnet, daß** die Abschaltung des ersten Wicklungsystems (21) des Elektromotors (20) im Nulldurchgang erfolgt.

11. Verfahren nach einem der Ansprüche 1 bis 10,
**dadurch gekennzeichnet, daß** aus der Starterbatterie (5) nur solange Strom gezogen wird, bis die Ausgangsspannung des Brennstoffzellenstapels (1) einen Wert erreicht hat, der über der Spannung der Starterbatterie (5) liegt.

12. Verfahren nach einem der Ansprüche 5 bis 11,
**dadurch gekennzeichnet, daß** als Steuereinrichtung (10) ein Stromrichter (30) mit Zwischenkreis verwendet wird, und daß die Betriebsspannung am Ausgang (9) des Brennstoffzellenstapels (1) kontinuierlich erhöht wird, wodurch die Bauteile im Zwischenkreis des Stromrichters (30) auf höhere Betriebspannung angehoben werden.

13. Brennstoffzellenanlage mit einem Brennstoffzellenstapel (1), mit einem Verdichter (2) zum Zuführen eines Betriebsmittels zum Brennstoffzellenstapel (1) und mit einem Elektromotor (20) zum Antrieb des Verdichters (2),
**dadurch gekennzeichnet, daß** der Elektromotor (20) des Verdichters (2) für einen Betrieb wahlweise mit Strom aus einer Starterbatterie (5) oder mit Strom aus dem Brennstoffzellenstapel (1) ausgelegt ist, wobei der Elektromotor (20) als Synchron- oder Asynchronmotor ausgelegt ist und zwei getrennte Wicklungssysteme (21,22) aufweist und wobei das erste Wicklungssystem (21) für die Zuführung niedriger Spannung und das zweite Wicklungssystem (22) für die Zuführung einer höheren Spannung ausgelegt ist.

14. Brennstoffzellenanlage nach Anspruch 13,
**dadurch gekennzeichnet, daß** die Brennstoffzellenanlage eine mobile, mit Luft (L) und Wasserstoff (H₂) betreibbare Brennstoffzellenanlage für einen Fahrzeugantrieb ist, die eine Mehrzahl von Brennstoffzellen in einem Brennstoffzellenstapel (1) umfaßt, dem über je einen Einlaß Wasserstoff (H₂) und verdichtete Luft (L) zuführbar ist, und daß der Lufteinlaß des Brennstoffzellenstapels (1) mit dem Verdichter (2) verbunden ist, der mit dem aus der Starterbatterie (5) speisbaren Elektromotor (20) verbunden ist.

15. Brennstoffzellenanlage nach Anspruch 13 oder 14,
**dadurch gekennzeichnet, daß** der Eingang (8) des Elektromotors (20) über eine elektronische Steuereinrichtung (10), die einen Stromrichter (30) aufweist, sowohl mit dem Ausgang (6) der Starterbatterie (5) als auch mit dem Ausgang (9) des Brennstoffzellenstapels (1) verbindbar oder verbunden ist.

16. Brennstoffzellenanlage nach Anspruch 15,
**dadurch gekennzeichnet, daß** eine Umschaltvorrichtung (12) vorgesehen ist, die elektrisch dem Eingang des Stromrichters (30) vorgeschaltet ist.

17. Brennstoffzellenanlage nach Anspruch 16,
**dadurch gekennzeichnet, daß** an die Starterbatterie (5) bzw. den Brennstoffzellenstapel (1) angeschlossen Eingänge der Umschaltvorrichtung (12) gleitend umschaltbar sind.

18. Brennstoffzellenanlage nach einem der Ansprüche 15 bis 17,
**dadurch gekennzeichnet, daß** der Ausgang (14) des Stromrichters (30) permanent mit dem Eingang (8) des Elektromotors (20) verbunden ist.

19. Brennstoffzellenanlage nach einem der Ansprüche 13 bis 18, **dadurch gekennzeichnet, daß** der Ausgang (6) der Starterbatterie (5) und der Ausgang (9) des Brennstoffzellenstapels (1) permanent über Entkopplungsdioden (27) mit dem Eingang (25,26) eines Stromrichters (30) verbunden sind.

20. Brennstoffzellenanlage nach einem der Ansprüche 13 bis 19, **dadurch gekennzeichnet, daß** die auf niedrige Spannung ausgelegte erste Wicklung (21) abschaltbar ist.

21. Brennstoffzellenanlage nach Anspruch 20,
**dadurch gekennzeichnet, daß** Abschaltelemente (31) vorgesehen sind, die in den Elektromotor (20) integriert sind.

## Claims

1. Method for starting a fuel cell system having a fuel cell stack (1), a compressor (2) for supplying a working medium to the fuel cell stack (1), and an electric motor (20) for driving the compressor (2),
**characterized in that** the electric motor (20) is initially fed with current from a starter battery (5), and then with current from the fuel cell stack (1), with the electric motor (20) being a synchronous motor or an asynchronous motor which has two separate winding systems (21, 22), and the first winding system (21) being designed for the voltage of the starter battery (5), and the second winding system (22) being designed for the operating voltage of the fuel cell stack (1), and a control device (10) being provided which comprises a converter (30) which is preferably in the form of an inverter.

2. Method according to Claim 1,
**characterized in that** the fuel cell system is a mobile air and hydrogen system, and **in that** the fuel cell system is supplied with air (L) as the working medium during starting and operation, and **in that** the air (L) is conveyed by the motor-driven compressor (2) in order to ensure the necessary operating pressure and, if necessary, additional humidifying of the air (L).

3. Method according to Claim 1 or 2,
**characterized in that** the electric motor (20) of the compressor (2) is supplied from the starter battery (5) during the starting phase of the fuel cell system.

4. Method according to one of Claims 1 to 3,
**characterized in that** the voltage of the starter battery (5) is different to the operating voltage of the fuel cell stack (1).

5. Method according to one of Claims 1 to 4,
**characterized in that**, when the fuel cell stack (1) reaches an adequate output voltage, a control device (10) which is located between the output (6) of the cell stack (1) and the motor input (8) interrupts the starting voltage supplied from the output of the starter battery (5), and connects the output voltage of the fuel cell stack (1) to the electric motor (20).

6. Method according to one of Claims 1 to 5,
**characterized in that** the rotation speed of the electric motor (20) is permanently regulated by the converter (30).

7. Method according to one of Claims 1 to 6,
**characterized in that** the system switches over from the starter battery (5) to the fuel cell stack (1) as soon as the output voltage of the fuel cell stack (1) is higher than the voltage of the starter battery (5).

8. Method according to one of Claims 1 to 7,
**characterized in that** the operating voltage of the fuel cell stack (1) is approximately twice as great as the voltage of the starter battery (5).

9. Method according to one of Claims 1 to 8,
**characterized in that** the electric motor (20) is permanently connected to the output (33) of the converter (30), **in that** the second winding system (22), which is designed for the operating voltage of the fuel cell stack (1), is permanently connected to the output (33) of the converter (30), and **in that** the first winding system (21), which is designed for the voltage of the starter battery (5), can be isolated from the voltage sources (1, 5) via disconnection elements (31).

10. Method according to Claim 9,
**characterized in that** the first winding system (21) of the electric motor (20) is disconnected at the zero crossing.

11. Method according to one of Claims 1 to 10,
**characterized in that** current is drawn from the starter battery (5) only until the output voltage of the fuel cell stack (1) has reached a value which is greater than the voltage of the starter battery (5).

12. Method according to one of Claims 5 to 11,
**characterized in that** a converter (30) having an intermediate circuit is used as the control device (10), and **in that** the operating voltage at the output (9) of the fuel cell stack (1) is increased continuously, as a result of which the components in the intermediate circuit of the converter (30) are raised to a higher operating voltage.

13. Fuel cell system having a fuel cell stack (1), having a compressor (2) for supplying a working medium to the fuel cell stack (1), and having an electric motor (20) for driving the compressor (2),
**characterized in that** the electric motor (20) of the compressor (2) is designed for operation optionally with current from a starter battery (5) or with current from the fuel cell stack (1), with the electric motor (20) being in the form of a synchronous motor or an asynchronous motor and having two separate winding systems (21, 22), and the first winding system (21) being designed to be supplied with a low voltage, and the second winding system (22) being designed to be supplied with a higher voltage.

14. Fuel cell system according to Claim 13,
**characterized in that** the fuel cell system is a mobile fuel cell system, which can be operated with air (L) and hydrogen (H₂), for a vehicle propulsion system, which comprises a number of fuel cells in a fuel cell stack (1) to which hydrogen (H₂) and compressed air (L) can be supplied via a respective inlet, and **in that** the air inlet of the fuel cell stack (1) is connected to the compressor (2), which is connected to the electric motor (20) that can be supplied from the starter battery (5).

15. Fuel cell system according to Claim 13 or 14,
**characterized in that** the input (8) of the electric motor (20) can be connected or is connected via an electronic control device (10), which has a converter (30), not only to the output (6) of the starter battery (5), but also to the output (9) of the fuel cell stack (1).

16. Fuel cell system according to Claim 15,
**characterized in that** a switching apparatus (12) is provided, which is connected electrically upstream of the input of the converter (30).

17. Fuel cell system according to Claim 16,
**characterized in that** inputs of the switching apparatus (12) which are connected to the starter battery (5) or to the fuel cell stack (1) can be switched over smoothly.

18. Fuel cell system according to one of Claims 15 to 17,
**characterized in that** the output (14) of the converter (30) is permanently connected to the input (8) of the electric motor (20).

19. Fuel cell system according to one of Claims 13 to 18,
**characterized in that** the output (6) of the starter battery (5) and the output (9) of the fuel cell stack (1) are permanently connected via decoupling diodes (27) to the input (25, 26) of a converter (30).

20. Fuel cell system according to one of Claims 13 to 19,
**characterized in that** the first winding (21), which is designed for low voltage, can be disconnected.

21. Fuel cell system according to Claim 20,
**characterized in that** disconnection elements (31) are provided, and are integrated in the electric motor (20).

## Revendications

1. Procédé pour faire démarrer une installation de piles à combustible, comprenant un empilement (1) de piles à combustible, un compresseur (2) pour envoyer un fluide de fonctionnement à l'empilement (1) de piles à combustible et un moteur (20) électrique pour entraîner le compresseur (2),
**caractérisé en ce que** l'on alimente le moteur (20) électrique d'abord en du courant provenant d'une batterie (5) de démarreur et ensuite en du courant provenant de l'empilement (1) de piles à combustible, le moteur (20) électrique étant un moteur synchrone ou un moteur asynchrone qui a deux systèmes (21, 22) d'enroulement distincts et **en ce que** le premier système (21) d'enroulement est conçu pour la tension de la batterie (5) du démarreur et le deuxième système (22) d'enroulement pour la tension de fonctionnement de l'empilement (1) de piles à combustible, et on prévoit un dispositif (10) de commande qui comprend un convertisseur (30) de courant qui est constitué, de préférence, en convertisseur statique de fréquence.

2. Procédé suivant la revendication 1,
**caractérisé en ce que** l'installation de piles à combustible est une installation mobile à air et à hydrogène et **en ce que** l'on envoie à l'installation de piles à combustible lors du démarrage et du fonctionnement comme fluide de fonctionnement de l'air (L) et **en ce que** l'on fait passer l'air (L) dans le compresseur (2) entraîné par moteur pour assurer la pression de fonctionnement nécessaire et, le cas échéant, une humidification supplémentaire de l'air (L).

3. Procédé suivant la revendication 1 ou 2,
**caractérisé en ce que** l'on alimente le moteur (4) électrique du compresseur (2) pendant la phase de démarrage de l'installation de piles à combustible à partir de la batterie (5) de démarreur.

4. Procédé suivant l'une des revendications 1 à 3,
**caractérisé en ce que** la tension de la batterie (5) du démarreur est différente de la tension de fonctionnement de l'empilement (1) de piles à combustible.

5. Procédé suivant l'une des revendications 1 à 4,
**caractérisé en ce que** lorsqu'une tension de sortie suffisante de l'empilement (1) de piles à combustible est atteinte, un dispositif (10) de commande se trouvant entre la sortie (6) de la batterie (5) de démarreur et/ou la sortie (9) de l'empilement (1) de piles à combustible et l'entrée (8) du moteur interrompt la tension de démarrage appliquée par la sortie de la batterie (5) de démarreur et on branche la tension de sortie de l'empilement (1) de piles à combustible sur le moteur (20) électrique.

6. Procédé suivant l'une des revendications 1 à 5,
**caractérisé en ce que** l'on règle la vitesse de rotation du moteur (20) électrique en permanence par le convertisseur (30) de courant.

7. Procédé suivant l'une des revendications 1 à 6,
**caractérisé en ce que** l'on effectue la commutation de la batterie (5) de démarreur à l'empilement (1) de piles à combustible dès que la tension de sortie de l'empilement (1) de piles à combustible est supérieure à la tension de la batterie (5) du démarreur.

8. Procédé suivant l'une des revendications 1 à 7,
**caractérisé en ce que** la tension de fonctionnement de l'empilement (1) de piles à combustible est à peu près deux fois plus haute que la tension de la batterie (5) du démarreur.

9. Procédé suivant l'une des revendications 1 à 8,
**caractérisé en ce que** le moteur (20) électrique est relié en permanence à la sortie (33) du convertisseur (30) de courant, **en ce que** le deuxième système (22) d'enroulement conçu pour la tension de fonctionnement de l'empilement (1) de piles à combustible est relié en permanence avec la sortie (33) du convertisseur (30) de courant et **en ce que** le premier système (21) d'enroulement conçu pour la tension de la batterie (5) du démarreur peut être coupé des sources (1, 5) de tension par des éléments (31) de déconnexion.

10. Procédé suivant la revendication 9,
**caractérisé en ce que** l'on effectue la déconnexion du premier système (21) d'enroulement du moteur (20) électrique au passage par zéro.

11. Procédé suivant l'une des revendications 1 à 10,
**caractérisé en ce que** l'on ne tire du courant de la batterie (5) du démarreur que jusqu'à ce que la tension de sortie de l'empilement (1) de piles à combustible ait atteint une valeur qui est supérieure à la tension de la batterie (5) du démarreur.

12. Procédé suivant l'une des revendications 5 à 11,
**caractérisé en ce que** l'on utilise comme dispositif (10) de commande un convertisseur (30) de courant à circuit intermédiaire et **en ce que** l'on élève continuellement la tension de fonctionnement à la sortie (9) de l'empilement (1) de piles à combustible, grâce à quoi les composants du circuit intermédiaire du convertisseur (30) de courant sont portés à une tension de fonctionnement plus haute.

13. Installation de piles à combustible comprenant un empilement (1) de piles à combustible, un compresseur (2) pour envoyer un fluide de fonctionnement à l'empilement (1) de piles à combustible et un moteur (20) électrique pour l'entraînement du compresseur (2),
**caractérisée en ce que** le moteur (20) électrique du compresseur (2) est conçu pour fonctionner au choix avec du courant provenant d'une batterie (5) de démarreur ou avec du courant provenant de l'empilement (1) de piles à combustible, le moteur (20) électrique étant un moteur synchrone ou un moteur asynchrone et ayant deux systèmes (21, 22) d'enroulement distincts et le premier système (21) d'enroulement étant conçu pour l'application d'une tension basse et le deuxième système (22) d'enroulement pour l'application d'une tension haute.

14. Installation de piles à combustible suivant la revendication 13,
**caractérisée en ce que** l'installation de piles à combustible est une installation de piles à combustible mobile pouvant fonctionner avec de l'air (L) et de l'hydrogène (H₂) pour la propulsion d'un véhicule automobile, qui comprend une multiplicité de piles à combustible dans un empilement (1) de piles à combustible auquel peut être envoyé par, respectivement, une entrée de l'hydrogène (H₂) et de l'air (L) comprimé et **en ce que** l'entrée d'air de l'empilement (1) de piles à combustible communique avec le compresseur (2) qui est relié au moteur (20) électrique pouvant être alimenté à partir de la batterie (5) du démarreur.

15. Installation de piles à combustible suivant la revendication 13 ou 14,
**caractérisée en ce que** l'entrée (8) du moteur (20) électrique peut être reliée ou est reliée par l'intermédiaire d'un dispositif (10) électronique de commande qui a un convertisseur (30) de courant tant avec la sortie (6) de la batterie (5) du démarreur qu'également avec la sortie (9) de l'empilement (1) de piles à combustible.

16. Installation de piles à combustible suivant la revendication 15,
**caractérisée en ce qu'**il est prévu un dispositif (12) de commutation qui est monté électriquement en amont de l'entrée du convertisseur (30) de courant.

17. Installation de piles à combustible suivant la revendication 16,
**caractérisée en ce que** des entrées du dispositif (12) de commutation, qui sont raccordées à la batterie (5) du démarreur ou à l'empilement (1) de piles à combustible, peuvent être commutées à glissement.

18. Installation de piles à combustible suivant l'une des revendications 15 à 17,
**caractérisée en ce que** la sortie (14) du convertisseur (30) de courant est reliée en permanence à l'entrée (8) du moteur (20) électrique.

19. Installation de piles à combustible suivant l'une des revendications 13 à 18,
**caractérisée en ce que** la sortie (6) de la batterie (5) du démarreur et la sortie (9) de l'empilement (1) de piles à combustible sont reliées en permanence par l'intermédiaire de diodes (27) de découplage à l'entrée (25, 26) d'un convertisseur (30) de courant.

20. Installation de piles à combustible suivant l'une des revendications 13 à 19,
**caractérisée en ce que** le premier enroulement (21) conçu pour une tension basse peut être déconnecté.

21. Installation de piles à combustible suivant la revendication 20,
**caractérisée en ce qu'**il est prévu des éléments (31) de déconnexion qui sont intégrés au moteur (20) électrique.
